Europäisches Patentamt

European Patent Office

Office européen des brevets

(11) Publication number: **0 117 600**
A1

# EUROPEAN PATENT APPLICATION

(21) Application number: **84300079.5**

(22) Date of filing: **05.01.84**

(51) Int. Cl.³: **A 01 N 63/00**
// (A01N63/00, 47/44, 43/90, 37/44)

(30) Priority: **29.01.83 GB 8302512**

(43) Date of publication of application: **05.09.84**
Bulletin **84/36**

(84) Designated Contracting States: **CH DE FR GB IT LI NL**

(71) Applicant: **FBC LIMITED, Hauxton, Cambridge CB2 5HU (GB)**

(72) Inventor: **Smith, Johannes Hendrik, PO Box 6, Letaba 0870 (ZA)**

(74) Representative: **Wells, Norman David et al, FBC LIMITED Industrial Property Department Chesterford Park Research Station, Saffron Walden Essex CB10 1XL (GB)**

(54) **Anti-bacterial method.**

(57) A method of combating bacterial diseases of plant material by applying thereto antibacterial compounds and a potentiating amount of hyaluronidase.

EP 0 117 600 A1

<u>83/02512</u>

ANTI-BACTERIAL METHOD

This invention concerns the treatment of bacterial diseases of plants.

Conventionally, bacterial diseases of plants, such as greening of oranges, blackarm disease of cotton, fireblight in pears and apples, bacterial rot in vegetables and bacterial blight in rice, have been treated by means of antibiotic compounds such as streptomycin, tetracycline or penicillin, or by other antibacterial compounds such as bronopol, mercury compounds or copper complexes. We have found that the action of these compounds can be significantly and unexpectedly increased if the compounds are used in conjunction with the enzyme hyaluronidase, which itself has no antibacterial activity.

Accordingly, in one aspect, this invention provides a method of combating bacterial diseases of plant material which comprises applying thereto an effective amount of one or more antibacterial compounds and a potentiating amount of hyaluronidase.

The compounds will preferably be applied together, but they may be applied separately, in which case the application of the hyaluronidase desirably precedes that of the antibacterial compound. The invention also provides an antibacterial composition which comprises one or more antibacterial compounds and a potentiating amount of hyaluronidase.

On large plants, and especially trees, it may be convenient and most efficacious to inoculate the plant with the hyaluronidase through the stem. However, the hyaluronidase may alternatively be applied by conventional spraying techniques, and this is the method of choice with smaller plants.

When seeds are to be treated, it is convenient to dust, coat or pellet the seeds with an appropriate composition containing the hyaluronidase and the antibacterial compound.

Among the bacteria which may be combated by the present invention are <u>Agrobacterium tumefaciens</u> (crown gall), <u>Corynebacterium fascious</u> (leafy gall), <u>C. betae</u>, <u>C. xerosis</u>, <u>Erwinia amylovora</u> (fireblight), <u>E. carotovora</u> (bacterial rots of vegetables), <u>Pseudomonas angulata</u>, <u>P. morsprunorum</u>, <u>P. syringae</u>, <u>P. lachrymans</u>, <u>P. phaseolicola</u>, <u>Xanthomonas campestris</u>, <u>X. malvacearum</u>, <u>X. oryzae</u> and <u>X. hyacinthi</u>.

Among the plant materials which may be treated are vegetables, cotton, rice, apples, pears, oranges, lemons and other citrus fruit.

The antibacterial compound may be applied in the present invention at rates which are generally lower than those at which it is normally applied. The actual rate of

0117600

application will depend, however, on the plant species to be treated, the nature and severity of the bacterial disease, and the desired effect. In general from 0.3 to 15 g, especially 1 to 5 g, of the antibacterial compound are applied per square metre of the drip area of the plants or trees.

The term 'drip area' is used herein to denote, as a measure of the size of a plant or tree, the area of ground which is a vertical projection of the foliage thereon. A wetted plant or tree drips excess moisture within this area.

The hyaluronidase is preferably employed at a rate of 0.3 to 15 mg, especially 1 to 5 mg, per square metre of the drip area of the plants or trees.

The ratio of the antibacterial compound(s) to the hyaluronidase is preferably from 250:1-4000:1, especially 500:1 to 2000:1, by weight.

The antibacterial compound and the hyaluronidase will normally be employed in the form of compositions containing a surface active agent and/or a carrier.

The compositions will normally be produced initially containing from 0.5 to 99%, preferably from 0.5 to 85%, and more usually from 10 to 50% by weight of the present compounds, which are diluted if necessary before application to the locus to be treated such that the concentration of active ingredient in the formulation applied is from 0.05 to 5% by weight.

The carrier may be water, in which case an organic solvent may also be present, though this is not usually employed. A flowable suspension concentration may be formed by grinding the compound with water, a wetting agent and a suspending agent, e.g. xanthan gum.

The carrier may alternatively be a water immiscible organic solvent, e.g. a hydrocarbon which boils within the range 130-270°C, e.g. xylene, in which the compound is dissolved or suspended. An emulsifiable concentrate containing a water immiscible solvent may be formed with a surface active agent so that the concentrate acts as a self-emulsifiable oil on admixture with water.

The carrier may alternatively be a water-miscible organic solvent e.g. 2-methoxy ethanol, methanol, propylene glycol, diethylene glycol, diethylene glycol monoethyl ether, formamide or methylformamide.

The carrier may alternatively be a solid, which may be finely divided or granular. Examples of suitable solids are limestone, clays, sand, mica, chalk, attapulgite, diatomite, perlite, sepiolite, silicas, silicates, lignosulphonates and solid fertilizers. The carrier can be of natural or synthetic origin or can be modified natural material.

Wettable powders soluble or dispersible in water may be formed by admixing the compound in particulate form with a particulate carrier or spraying molten compound on to the particulate carrier, admixing a wetting agent and a dispersing agent and finely grinding the whole powder mixture.

An aerosol composition may be formed by admixing the compound with a propellant, e.g. a polyhalogenated alkane such as dichlorofluoromethane, and suitably also with a solvent.

The term 'surface active agent' is used in the broad sense to include materials variously called emulsifying agents, dispersing agents and wetting agents. Such agents are well known in the art.

The surface active agents used may comprise anionic surface active agents, for example mono- or di-esters of phosphoric acid with a fatty alcohol ethoxylate, or salts of such esters, fatty alcohol sulphates such as sodium dodecyl sulphate, ethoxylated fatty alcohol sulphates, ethoxylated alkylphenol sulphates, lignin sulphates, petroleum sulphonates, alkylaryl sulphonates such as alkyl-benzene sulphonates or lower alkylnaphthalene sulphonates, salts of sulphonated naphthaleneformaldehyde condensates, or more complex sulphonates such as the amide sulphonates, e.g.

the sulphonated condensation product of oleic acid and N-methyl taurine or the dialkyl sulphosuccinates e.g. the sodium sulphonate of dioctyl succinate.

The surface active agents may also comprise non-ionic agents, for example condensation products of fatty acid esters, fatty alcohols, fatty acid amides or alkyl-substituted phenols with ethylene oxide, fatty esters of polyhydric alcohol ethers e.g. sorbitan fatty acid esters, condensation products of such esters with ethylene oxide e.g. polyoxyethylene sorbitan fatty acid esters, block copolymers of ethylene oxide and propylene oxide, acetylenic glycols such as 2,4,7,9-tetramethyl-5-decyn-4,7-diol, or ethoxylated acetylenic glycols.

The surface active agents may also comprise cationic agents, for example alkyl- and/or aryl-substituted quaternary ammonium compounds such as cetyl trimethylammonium bromide, or ethoxylated tertiary fatty amines.

Preferred surface active agents include ethoxylated fatty alcohol sulphates, lignin sulphonates, alkyl-aryl sulphonates, salts of sulphonated naphthaleneformaldehyde condensates, salts of sulphonated phenolformaldehyde condensates, sodium oleoyl N-methyltauride, dialkyl sulphosuccinates, alkyl phenol ethoxylates, and fatty alkyl ethoxylates.

If desired, the antibacterial compounds and the hyaluronidase may be supplied in a pack which contains each in a separate container so that the components may be mixed immediately prior to use or used consecutively.

The invention is further described, though only by way of illustration, in the following Example.

Example

Four holes were drilled into the xylem of the trunks of each of 15 citrus trees for each of the treatments set out below. For each treatment about 4 litres of the relevant solution was injected via these holes so as to give a dosage rate of 3 grams of tetracycline hydrochloride per square metre of drip area of the tree (about 12 grams of tetracycline per tree).

Four hours after treatment, 100 leaves per tree were picked, and 7 mm square leaf samples were cut therefrom and placed in a petri-dish containing a culture of <u>Bacillus</u> <u>brevis</u>.

Twenty-four hours later, the percentage inhibition of <u>Bacillus</u> <u>brevis</u> was recorded, the results obtained being as set out below:

| <u>Treatment</u> | <u>% Inhibition</u> |
|---|---|
| Tetracycline hydrochloride | 20 |
| Tetracycline hydrochloride + ½ ampoule hyaluronidase (750 I.U.) | 55 |

| Treatment | % Inhibition |
|---|---|
| Tetracycline hydrochloride <br> + 1 ampoule hyaluronidase (1500 I.U.) | 100 |
| Untreated Control | 0 |

This demonstrates the greatly improved distribution of the tetracycline hydrochloride within the trees due to the hyaluronidase.

CLAIMS

1. A method of combating bacterial diseases of plant material which comprises applying thereto an effective amount of one or more antibacterial compounds and a potentiating amount of hyaluronidase.

2. A method according to claim 1 wherein the antibacterial compound employed is an antibiotic.

3. A method according to claim 2 wherein the antibiotic is streptomycin, tetracycline or penicillin.

4. A method according to any of claims 1 to 3 wherein the antibacterial compound is applied at a rate of from 0.3 to 15 g per square metre of the drip area of a plant or tree.

5. A method according to any of claims 1 to 4 wherein the hyaluronidase is applied at a rate of from 0.3 to 15 mg per square metre of the drip area of a plant or tree.

6. A method according to any of claims 1 to 5 wherein the antibacterial compound and the hyaluronidase are inoculated into a plant or tree.

7. A method according to any of claims 1 to 6 when employed for the control of greening of oranges, blackarm disease of cotton, fireblight in pears or apples, bacterial rot in vegetables or bacterial blight in rice.

8. An antibacterial composition which comprises one or more antibacterial compounds and hyaluronidase in association with a suitable carrier and/or surface active agent.

0117600

9. An antibacterial composition according to claim 8 wherein the ratio of the antibacterial compound(s) to the hyaluronidase is from 250:1 to 4000:1 by weight.

10. A pack which contains, in separate containers, one or more antibacterial compounds, and hyaluronidase.

## European Patent Office

# EUROPEAN SEARCH REPORT

Application number

EP  84 30 0079

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | FR-E-  96 675  (CHIMIOTECHNIC) <br> * Whole document * <br><br> --- <br><br> | 1-3 | A 01 N   63/00 // <br> (A 01 N   63/00 <br> A 01 N   47/44 <br> A 01 N   43/90 <br> A 01 N   37/44 ) |
| A | THE MERCK INDEX, 9th edition, 1976, Merck & Co., Rahway, US <br> * Page 624, entry 4635 * <br><br> ----- | | |

TECHNICAL FIELDS
SEARCHED (Int. Cl. 3)

A 01 N

The present search report has been drawn up for all claims

| Place of search <br> THE HAGUE | Date of completion of the search <br> 18-05-1984 | Examiner <br> FLETCHER A.S. |
|---|---|---|

CATEGORY OF CITED DOCUMENTS

X : particularly relevant if taken alone
Y : particularly relevant if combined with another
　　document of the same category
A : technological background
O : non-written disclosure
P : intermediate document

T : theory or principle underlying the invention
E : earlier patent document, but published on, or
　　after the filing date
D : document cited in the application
L : document cited for other reasons

 

& : member of the same patent family, corresponding
　　document

EPO Form 1503. 03.82